# EUROPEAN PATENT APPLICATION

(11) **EP 4 730 003 A2**
(43) Date of publication of application: **22.04.2026**
(21) Application number: 26152768.3
(22) Date of filing: 21.08.2024
(51) Int. Cl.: G02B 6/35

(54) **OPTICAL SWITCHING**

(30) Priority: 25.08.2023 US 202363534685 P
(62) Divisional of application: 24772449.5
(71) Applicant: Eoptolink Technology Singapore Pte. Ltd., Paya Lebar Square 409051 (SG)
(72) Inventor: TIGLI, Hus, San Diego, 92101 (US); TAKETOMI, Yoshinao, San Diego, 92101 (US)
(74) Representative: Lapienis, Juozas

(57) **Abstract**

Disclosed are systems and methods associated with an improved optical switch. An optical switch may include light sources configured to produce a set of control beams co-aligned with a communication beam and that interact with each of a set of MEMS mirrors. Each of the set of control beams are passed through a respective screen so as to generate an image corresponding to a layout of an associated MEMS mirror that can then be analyzed to affect an operation of the optical switch, such as by managing an orientation and/or position of each MEMS mirror. In some aspects, the one or more hardware processors may utilize AI techniques to reduce processing time and learn behavior of the optical switch. In some aspects, the system may utilize the information to generate alerts and/or information relating to the end of life or other operational parameters of the optical switch.

## Description

### CROSS REFERENCE TO RELATED APPLICATIONS

This application is a divisional of European patent application No. 24772449.5, filed on 8 January 2026, entitled "OPTICAL SWITCHING". The entire content of the aforementioned application is incorporated herein by reference.

### FIELD OF THE DISCLOSURE

The general field of this disclosure is optical circuit switches (OCS) in the context of networking infrastructure.

### BACKGROUND

Circuit switches are parts of a type of networking infrastructure that facilitates establishment of a communication channel between nodes of a network. For example, packets of data may be transmitted over a network between nodes. A circuit switch may facilitate the transfer of a number of packets from a source node directly to the correct destination node. Optical networks, specifically, use light signals to transmit data between nodes of the network. Traditionally, electrical packet switches (EPS) are utilized to direct data packets towards their correct destination. However, in optical networks, these types of switches require converting a received optical signal to an electronic signal for processing and back to an optical signal for output. This is computationally costly and can be slow. In contrast, optical circuit switches (OCS) are designed to transmit data in the optical domain. This type of all-optical switching over optical fibers can significantly reduce latency and reduce power consumption and increase bandwidth for the network compared to electrical or electronic signals.

However, OCS require accurate and precise techniques for co-aligning optical beams in order to ensure accurate communication of data. Some examples of OCS techniques for co-aligning beams is included in U.S. Patent No. 7,777,961, entitled OPTICAL SWITCH WITH CO-AXIAL ALIGNMENT BEAM, filed March 26, 2007, and which is hereby incorporated by reference herein in its entirety.

### SUMMARY OF THE INVENTION

Various embodiments of systems, methods and devices within the scope of the appended claims each have several aspects, no single one of which is solely responsible for the desirable attributes described herein. Without limiting the scope of the appended claims, some prominent features are described herein.

In some aspects, the techniques described herein relate to an optical switch for aligning at least one input optical communication signal from at least one input fiber of an input fiber bundle with at least one output fiber of an output fiber bundle, said optical switch including: a light source configured to produce a control beam; a microelectromechanical (MEMS) mirror array; a beam combiner configured to combine a communication beam and the control beam into a co-linear path towards a MEMS mirror of the MEMS mirror array; a beam splitter configured to split the communication beam and the control beam after reflection by the MEMS mirror; an image sensor positioned to capture an image of the control beam after interacting with the beam splitter; one or more hardware processors in communication with the image sensor and configured to: determine an intensity of a centroid of the control beam based on the image; and update an output intensity of the light source based at least in part on the determined intensity of the centroid of the control beam to generate an updated control beam from the light source.

In some aspects, the techniques described herein relate to a method of aligning at least one optical input with at least one optical output, the method including: determining an intensity of a centroid of a control beam of an optical switch on a camera sensor of the optical switch, wherein a location of the centroid on the camera sensor is associated with a location of a centroid of a communication beam on a MEMS mirror of the optical switch; updating an output intensity of the control beam based at least in part on the determined intensity of the centroid of the control beam to generate an updated control beam; determining a position of a centroid of the updated control beam on the camera sensor; and optimizing an alignment of the communication beam with at least one output fiber of an output fiber bundle coupled to the optical switch based at least in part on the position of the centroid of the updated control beam on the camera sensor.

In some aspects, the techniques described herein relate to an optical switch, said optical switch including: a light source configured to produce a control beam; a beam combiner configured to combine a communication beam and the control beam into a co-linear path towards a MEMS mirror; a beam splitter configured to split the communication beam and the control beam after reflection by the MEMS mirror; an image sensor configured to capture an image of the control beam after interacting with the beam splitter; one or more hardware processors in communication with the image sensor and configured to: determine an intensity of a centroid of the control beam based on the image; and compare the intensity to a lookup table to determine an approximate time until end of life of the optical switch.

In some aspects, the techniques described herein relate to an optical switch for aligning at least one input optical communication signal from at least one input fiber of an input fiber bundle with at least one output fiber of an output fiber bundle, said optical switch including: a light source configured to produce a control beam; a beam combiner configured to combine the communication beam and the control beam into a co-linear path towards a MEMS mirror array, the MEMS mirror array including a plurality of mirrors arrayed in a first pattern and configured to tilt in a plurality of directions to control a path of the combined beam; a beam splitter configured to split the communication beam and the control beam after reflection by the MEMS mirror array; an image sensor configured to capture an image of the control beam after interacting with the beam splitter; one or more hardware processors in communication with the image sensor and configured to: tilt each mirror of the MEMS mirror array in each of the plurality of directions from a starting position; record a position of the control beam on the image sensor for each position of each mirror of the MEMS mirror array; align the communication beam with the of the output fiber bundle based at least in part on the recorded positions of the control beam.

In some aspects, the techniques described herein relate to an optical switch for aligning at least one input optical communication signal from at least one input fiber of an input fiber bundle with at least one output fiber of an output fiber bundle, said optical switch including: a light source configured to produce a control beam; a beam combiner configured to combine the communication beam and the control beam into a co-linear path towards a MEMS mirror array, the MEMS mirror array including a plurality of mirrors arrayed in a first pattern; a plurality of actuators configured to actuate the MEMS mirror array, wherein each of the plurality of actuators are configured to tilt the MEMS mirror array in response to an applied voltage; a beam splitter configured to split the communication beam and the control beam after reflection by the MEMS mirror array; an image sensor configured to capture an image of the control beam after interacting with the beam splitter; one or more hardware processors in communication with the image sensor and configured to: for each mirror of the MEMS mirror array, collect voltage calibration data by performing steps to: select a mirror of the MEMS mirror array to test; apply a first pre-determined voltage to the plurality of actuators to approximately align the control beam with the selected mirror; record a position of a centroid of the control beam on the image sensor in response to the applied pre-determined voltage; apply a set change to the pre-determined voltage to each of the plurality of actuators; and record, for each of the plurality of actuators, a position of the centroid in response to the changed applied voltage; and align the communication beam with the at least one output fiber of the output fiber bundle based at least in part on the voltage calibration data for each mirror of the MEMS mirror array.

In some aspects, the techniques described herein relate to a method of calibrating an optical switch to align at least one optical input with at least one optical output, the method including: for a plurality of optical switches used for training: tilting each mirror of a MEMS mirror array of an optical switch in each of a plurality of directions from a starting position, the MEMS mirror array including a plurality of mirrors arrayed in a first pattern; record, for each position of each mirror of the MEMS mirror array, a position of a control beam of the optical switch on an image sensor of the optical switch to generate MEMS mirror calibration data; train a machine learning classifier or classifiers to generate calibration prediction data based on the MEMS mirror calibration data for the plurality of training optical switches; for a test optical switch, generate test MEMS mirror calibration data; generate, using the machine learning classifier, a calibration prediction based on the test MEMS mirror calibration data; and calibrate the test optical switch based on the calibration prediction.

In some aspects, the techniques described herein relate to an optical switch for aligning at least one input optical communication signal from at least one input fiber of an input fiber bundle with at least one output fiber of an output fiber bundle, said optical switch including: a light source configured to produce a control beam; a beam combiner configured to combine a communication beam and the control beam into a co-linear path towards a MEMS mirror, wherein the MEMS mirror is supported by a gimbal and a plurality of actuators are configured to rotate the MEMS mirror about the gimbal in different directions; a beam splitter configured to split the communication beam and the control beam after reflection by the MEMS mirror; an image sensor configured to capture an image of the control beam after interacting with the beam splitter; one or more hardware processors in communication with the image sensor and configured to: receive a first request to align the communication beam with a first output fiber; actuate at least some of the plurality of actuators to tilt the MEMS mirror to align the control beam with a desired location on the MEMS mirror associated with the first output fiber based on first calibration data; determine a first position of a centroid of the control beam on the image sensor; actuate at least some of the plurality of actuators to tilt the MEMS mirror to correct the alignment of the control beam with the desired location on the MEMS mirror based on the first position of the centroid; receive a first request to align the communication beam with a second output fiber; predict second calibration data based at least in part on the first calibration data and the first position of the centroid; and actuate at least some of the plurality of actuators to tilt the MEMS mirror to align the control beam with a desired location on the MEMS mirror associated with the second output fiber based at least in part on the second calibration data.

In some aspects, the techniques described herein relate to an optical switch for aligning at least one input optical communication signal from at least one input fiber of an input fiber bundle with at least one output fiber of an output fiber bundle, said optical switch including: a light source configured to produce a control beam; a beam combiner configured to combine a communication beam and the control beam into a co-linear path towards a MEMS mirror, wherein the MEMS mirror is supported by a gimbal and a plurality of actuators are configured to rotate the MEMS mirror about the gimbal in different directions; a beam splitter configured to split the communication beam and the control beam after reflection by the MEMS mirror; an image sensor configured to capture an image of the control beam after interacting with the beam splitter; one or more hardware processors in communication with the image sensor and configured to: actuate at least some of the plurality of actuators to tilt the MEMS mirror to align the control beam with a desired location on the MEMS mirror associated with a first output fiber based on first calibration data; determine a first position of a centroid of the control beam on the image sensor; and determine, using machine learning, a correction to the first calibration data based at least in part on the first position.

In some aspects, the techniques described herein relate to an optical switch for aligning at least one input optical communication signal from at least one input fiber of an input fiber bundle with at least one output fiber of an output fiber bundle, said optical switch including: a light source configured to produce a control beam; a beam combiner configured to combine a communication beam and the control beam into a co-linear path towards a MEMS mirror, wherein the MEMS mirror is supported by a gimbal and a plurality of actuators are configured to rotate the MEMS mirror about the gimbal in different directions; a beam splitter configured to split the communication beam and the control beam after reflection by the MEMS mirror; an image sensor configured to capture an image of the control beam after interacting with the beam splitter; one or more hardware processors in communication with the image sensor and configured to: receive a first request to align the communication beam with a first output fiber; actuate at least some of the plurality of actuators to tilt the MEMS mirror to align the control beam with a desired location on the MEMS mirror associated with the first output fiber based on first calibration data; determine a first position of a centroid of the control beam on the image sensor; and predict using a machine learning classifier, a time to end of life of the optical switch based at least in part on the first calibration data and the first position of the centroid.

### BRIEF DESCRIPTION OF DRAWINGS

These and other features, aspects, and advantages of the present application are described with reference to drawings of certain embodiments, which are intended to illustrate, but not limit, the present disclosure. It is to be understood that the attached drawings are for the purpose of illustrating concepts disclosed in the present application and may not be to scale:
FIG. 1A shows a cross-sectional view of an example of an optical circuit switch (OCS) device.
FIG. 1B illustrates a perspective view of a configuration of an example of an OCS device.
FIG. 1C illustrates an example beam path in example configuration of an example OCS device.
FIG. 1D illustrates an example geometric configuration of an example OCS device illustrating certain light propagation paths relative to components of the OCS device.
FIG. 1E shows an example mirror structure of an example OCS device.
FIG. 2A shows an example sensor cell layout of an example OCS device.
FIG. 2B shows an example relationship between a mirror position and a beam position of an example OCS device.
FIG. 3A shows an example beam control operation of an example OCS device.
FIG. 3B shows another example beam control operation of an example OCS device.
FIG. 3C illustrates an example beam control process using a position of a control beam on a camera sensor of an OCS device.
FIG. 3D illustrates an example beam control process using an intensity of a control beam on a camera sensor of an OCS device.
FIG. 4A is an illustration of an optical path of a beam from a mirror on an input side to a plurality of mirrors on an output side of an example OCS device based on a set of input voltages for a set of mirror actuators.
FIG. 4B illustrates an example mapping of voltages given to a set of mirror actuators where voltages for an input and output mirror are similar.
FIGS. 4C-4E illustrate example mappings of voltages given to a set of mirror actuators where voltages for an input and output mirror are dissimilar.
FIG. 5A shows example calibration information for an OCS device.
FIG. 5B shows an example process for collection the example calibration information of FIG. 5A.

### DETAILED DESCRIPTION

Disclosed herein are systems and methods for an improved optical circuit switch (OCS). For example, systems and methods disclosed herein may include, but are not limited to improved beam control, improved operational efficiency, and improved manufacturing processes.

Although certain preferred examples are disclosed below, inventive subject matter extends beyond the specifically disclosed examples to other alternative examples and/or uses and to modifications and equivalents thereof. Thus, the scope of the claims that may arise here is not limited by any of the particular examples described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain examples; however, the order of description should not be construed to imply that these operations are order dependent. Additionally, the structures, systems, and/or devices described herein may be embodied as integrated components or as separate components. For purposes of comparing various examples, certain aspects and advantages of these examples are described. Not necessarily all such aspects or advantages are achieved by any particular embodiment. Thus, for example, various examples may be carried out in a manner that achieves or optimizes one advantage or group of advantages as taught herein without necessarily achieving other aspects or advantages as may also be taught or suggested herein.

### Example Hardware Configuration

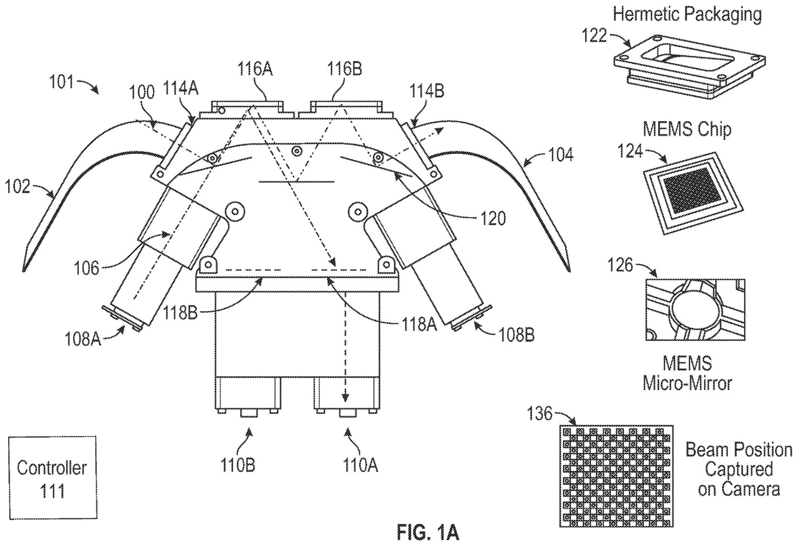

FIGS. 1A-1D show example aspects and views of an optical circuit switch (OCS) device, such as may be used with systems and methods disclosed herein. The OCS device is configured to transmit light 100 from an input fiber of a plurality of input fibers 102 to an output fiber of a plurality of output fibers 104. The OCS device transmits the light using a system of MEMS mirrors and associated optics to direct light in free space, as will be described herein. The OCS device additionally includes a control beam that is monitored by one or more image sensors 110 to help control the operation of the OCS device, as will be described herein. Additional example information relating to various aspects of an OCS device and/or system are described with reference to U.S. Patent No. 7,777,961, entitled OPTICAL SWITCH WITH CO-AXIAL ALIGNMENT BEAM, filed March 26, 2007, and which is hereby incorporated by reference herein in its entirety.

FIG. 1A illustrates an example of an example optical core 101 of an example OCS device. The optical core 101 may be configured to transmit light from an input configured to receive an input fiber bundle 102 to an output configured to receive an output fiber bundle 104. An input may include or be configured to couple to an input fiber management portion 114A of an optical core 101. Similarly, an output may include or be configured to couple to an output fiber management portion 114B of an optical core 101.

The input fiber management portion 114A may be configured to arrange the fibers of the input fiber bundle 102 to facilitate control of a light beam path within the OCS device. For example, the input fiber management portion 114A may be configured to align and arrange the plurality of input fibers in an input fiber bundle 102 into a pattern, such as a two dimensional (2D) array. The input fiber management portion 114A may sometimes be referred to herein as a collimator 114A and/or include collimating optics and may include, in some examples, one or more layers of multi-fiber ribbons (such as 8-fiber ribbons) connected via fan-outs or fan-ins to connects of a faceplate. The input fiber management portion 114A may be configured to align light received from up to each of the input fibers of the fiber bundle along a parallel beam paths towards optics 120 of the optical core 101, such as beam combiner or beam splitter.

The output fiber management portion 114B may be configured to arrange the fibers of the output fiber bundle 104 to facilitate receipt of the light into an intended destination output fiber of the output fiber bundle 104. For example, an optical core 101 may additionally include an output fiber management portion 114B having a similar arrangement to an input fiber portion 114A. For example, the output fiber management portion 114B may sometimes be referred to herein as a collimator 114B and/or may include collimating optics and may include, in some examples, one or more layers of multi-fiber ribbons (such as 8-fiber ribbons) connected via fan-outs or fan-ins to connects of a faceplate. The output fiber management portion 114B may be configured to arrange the output fibers of the output fiber bundle 104 into a pattern, such as 2D array, that allows light to be received into a specific output fiber of the output fiber bundle 104 by separating and arranging the output fibers.

The optical core 101 may include one or more control beams 106 generated by the OCS device. The one or more control beams 106 may be generated and/or originated by one or more injection modules 108A, 108B. In some examples, a first control beam 106 may be associated with a first injection module 108A and configured to direct light towards a first MEMS mirror 116A. In some examples, a second control beam 106 may be associated with a second injection module 108B and configured to direct light towards a second MEMS mirror 116B. The one or more control beams 106 may be monitored by one or more cameras 110 having one or more image sensors 134. A monitored control beam 106 may be utilized by the system, using systems and methods described herein, to affect operation of the OCS device. For example, as will be described in further detail herein, the OCS device, via an image sensor, may monitor a position and/or intensity of at least a portion of the control beam 106 to control operation of one or more MEMS mirrors of the OCS device and consequently, manage the beam path of the input light 100 towards an output.

An injection module or unit 108A, 108B can include a vertical cavity surface laser (VCSEL) or other laser. The one or more injection modules may be configured to operate in the near infrared, such as in a wavelength or wavelength range at or around 850 nm. However, other wavelengths and/or wavelength ranges are also possible. For example, one or more injection modules may be configured to operate in a range of 600-1100 nm. The injection module 108A, 108B may be configured to emit a collimated control beam 106 towards optics 120, such as beam combiner 121A, 121B configured to co-align the control beam 106 with input light 100 towards a MEMS mirror 116A, 116B. The optical core 101 may include a plurality of injection modules 108A, 108B, each of which are arranged to emit a control beam 106 towards a specific MEMS mirror 116A, 116B and a specific camera 110A, 110B.

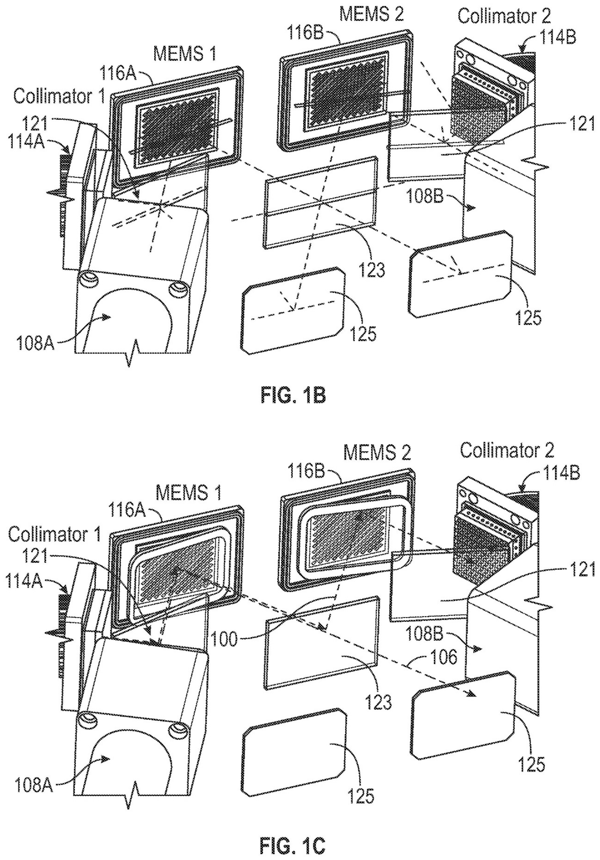

The optical core 101 can include optics 120, such as one or more beam combiners 121A, 121B, one or more MEMS mirrors 116A, 117B, one or more beam splitters 123, and/or one or more diffusers 125, such as shown in FIGS. 1B and 1C. The optics 120 may be configured to shape and/or control the beam path of light 100 within the optical core 101.

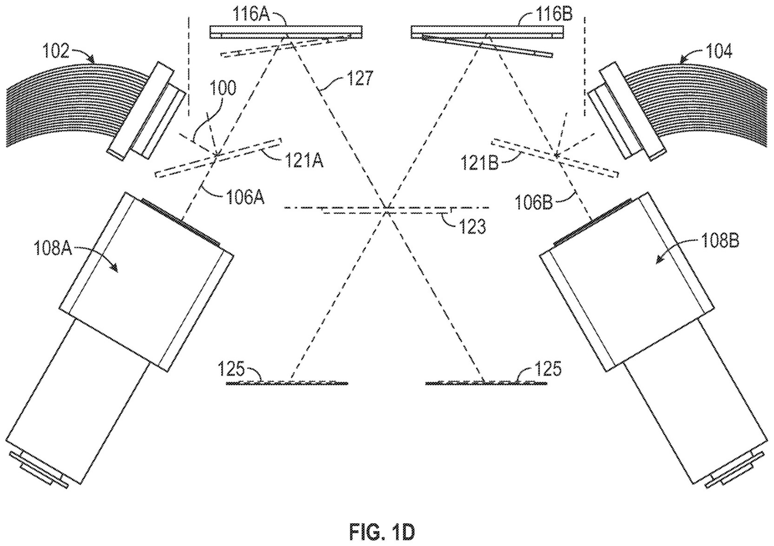

A beam combiner 121A, 121B may be configured to co-align the light 100 from an input fiber management portion 114A and the control beam 106 from an injection module 108A to generate a co-aligned light beam 127. The co-aligned light 127 may be configured to interact with the MEMS mirror 116A at approximately the same location on the MEMS mirror 116A. For example, a MEMS mirror 116A may include a MEMS chip 124 include an array of micro-mirrors 126. The co-aligned light 127 may be configured to interact with the same micro-mirror in the array. The beam combiner 121A, 121B may be in reflectance geometry with the input fiber management portion 114A and a transmittance geometry with the injection module 108A. As illustrated in FIG. 1D, the beam combiner 121A, 121B may be angled at approximately 45 degrees from a beam path 106A of a control beam emitted from an injection module 108A and/or approximately 45 degrees from a beam path 100 of an input (or communication) beam emitted from an input fiber bundle 102.

The one or more MEMS mirrors 116A, 116B may include, in some examples, two MEMS mirror arrays, wherein a first mirror array 116A is associated with an input side (or a portion of the OCS device associated with an input 102) and a second mirror array 116B is associated with an output side (or a portion of the OCS device associated with an output 104). The first mirror array 116A may be arranged to reflect light, such as a co-aligned beam 127, towards further optics (such as a beam splitter 123, screen 118A or 125, and/or other optics) and/or a camera or image sensor 110A. The second MEMS mirror array 116B may be arranged to reflect light, such as light from an injection module 106B, towards further optics (such as a beam splitter 123, screen 118B or 125, and/or other optics) and/or a camera or image sensor 110B. The second MEMS mirror array 116B may further be arranged to reflect light 100, such as light 100 from a beam splitter 123 towards further optics (such as a beam combiner 121A, 121B) and/or an output 104.

The one or more MEMS mirror arrays 116A, 116B may each include, but are not limited to a MEMS chip 124 that includes a plurality of MEMS micro-mirrors 126 arranged in an array and/or a pattern. The MEMS chip 124 may be sealed in hermetic packaging 122 so as to protect the MEMS mirror array 116A, 116B from environmental damage. The array and/or pattern may have at least the same number of elements or micro-mirrors 126 as input fibers and/or output fibers. Additionally, the positions of the MEMS micro mirrors may correspond to the position of the input (or output fibers) in a fiber management portion 114A (or 114B). For example, each of the MEMS micro-mirrors of the first MEMS mirror array may be arranged so as to reflect light from a particular fiber of the input fiber bundle. Similarly, each of the MEMS micro-mirrors of the second MEMS mirror array may be arranged so as to reflect light to a particular fiber of the output fiber bundle. The orientation of each MEMS micro-mirror of the MEMS mirror arrays 116A, 116B may thus be modified in order to establish a unique connection between a particular input fiber and a particular output fiber. For example, an incoming signal from a first fiber may follow a beam path within the optical core 101 to reflect off of a first MEMS micro mirror in the first MEMS mirror array 116A. The incoming signal may be intended for a second fiber in the output fiber bundle and thus, the first MEMS micro mirror may be actuated to reflect the incoming signal towards a second MEMS micro mirror in the second MEMS mirror array 116B that is associated with the second fiber in the output fiber bundle. The second MEMS micro mirror may then be actuated to reflect the incoming signal towards the second output fiber.

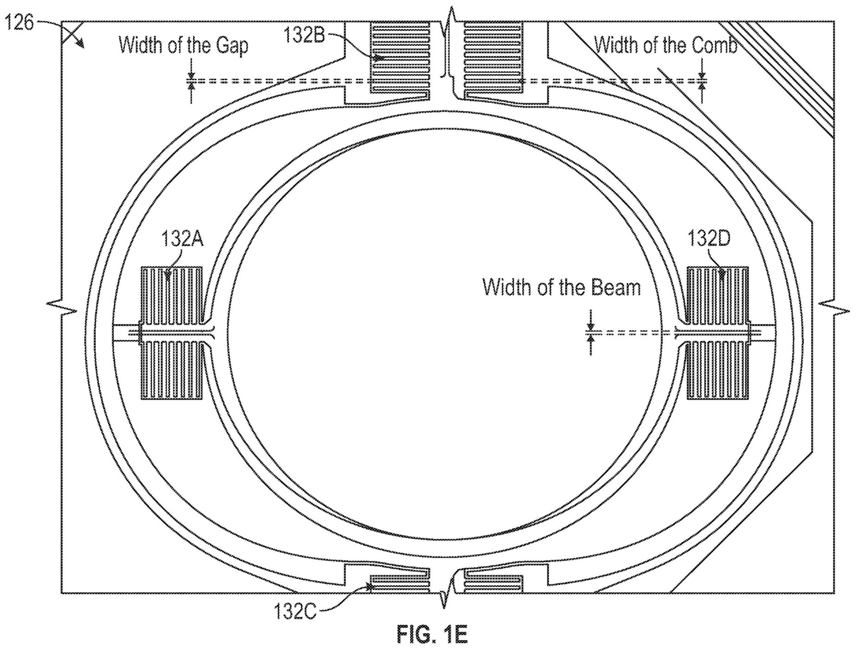

A MEMS micro-mirror 126 can include a MEMS scanning mirror, such as illustrated in FIG. 1E. The MEMS scanning mirror 126 can include a mirror structure having a gimbal and a plurality of actuators 132. The plurality of actuators 132 may include up to four or more actuators configured to actuate a micro-mirror 126. In the case of four actuators, there may be an actuator at quadrilateral sides of the micro-mirror 126 such that each of the four actuators may be able to linearly actuate the micro-mirror 126 in a different direction. The plurality of actuators may include a plurality of microelectromechanical actuators, such as comb drive actuators.

A comb drive actuator 132 includes a plurality of combs, both stationary and mobile. A comb-drive actuator is activated by applied voltage between static and moving combs, causing them to be drawn together. Thus, a voltage applied to the actuator 132 may effectively cause movement of the mirror 126 in a particular direction. A set of voltages applied to the set of four actuators 132 may effectively cause the mirror 126 to move in two 2D space. Each of the MEMS mirrors 126 in a mirror array 124 may include a set of actuators 132. It is note that when the width of the beam that support the mirror structure or the gimbal is wider than the designed value, then the mirror needs higher voltage to reach all the opponent mirrors. Conversely, when the width of the combs (stationary and movable) is thinner than the designed value, which increases the width of the gaps between the combs, then the mirror needs higher voltage to reach all the opponent mirrors.

With continued reference to FIG. 1D, optics 120 may include a beam splitter 123. The beam splitter 123 may be configured to reflect light 100, which may include a communication beam received from an input fiber bundle 102, towards a second MEMS mirror 116B. The beam splitter 123 may further be configured to transmit the control beam towards an associated camera or image sensor 110A, 110B and/or other optics, (such as a screen 118A, 118B or diffuser 125).

With continued reference to FIG. 1D, an additional beam combiner 121A, 121B may be configured to co-align the light 100 from the beam splitter 123 and the control beam 106 from an injection module 108B. The co-aligned light may be configured to interact with the MEMS mirror 116B at approximately the same location on the MEMS mirror 116B. For example, a MEMS mirror 116B may include a MEMS chip 124 include an array of micro-mirrors 126. The co-aligned light may be configured to interact with the same micro-mirror in the array. The beam combiner 121A, 121B may be in reflectance geometry with the output fiber management portion 114B and a transmittance geometry with the injection module 108B. As illustrated in FIG. 1D, the beam combiner may be angled at approximately 45 degrees from a beam path 106B of a control beam emitted from an injection module 108B and/or approximately 45 degrees from a beam path 100 of a communication beam transmitted towards an output fiber bundle 104.

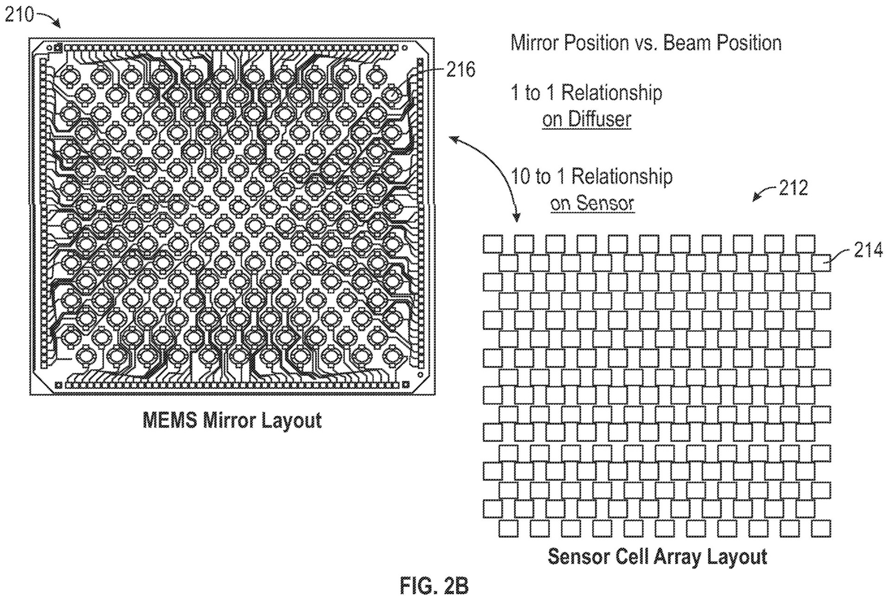

Optics 120 may additionally or alternatively include a screen or diffuser 125. The screen or diffuser may be configured to produce an image 136 on an image sensor 110A, 110B. The screen may include a holographic diffuser 125. The screen may be configured to produce an image in a pattern (sometimes referred to as an illumination pattern) corresponding to a mirror array pattern of a MEMS mirror array 116A, 116B and/or pattern of an input fiber management portion 114A and/or output fiber management portion 114B. The correlation of the MEMS mirror array layout and the arrangement of the screen may be direct, linear, or otherwise correlated. In some examples, a MEMS mirror array layout 210 and a diffuser layout may be directly correlated so as to generate an illumination pattern 212 correlated to the MEMS mirror array layout 210 on the image sensor. As illustrated in the non-limiting example of FIG. 2B, there may be a one to one relationship between a MEMS mirror spacing and a sensor spacing on image sensor 110A, 110B. Further, there may be a ten to one relationship between a spacing on the diffuser and sensor spacing on the image sensor 110A, 110B. In some examples, there may be a ten to one relationship between a beam size and a number of pixels on and/or size of an image sensor element of an image sensor array.

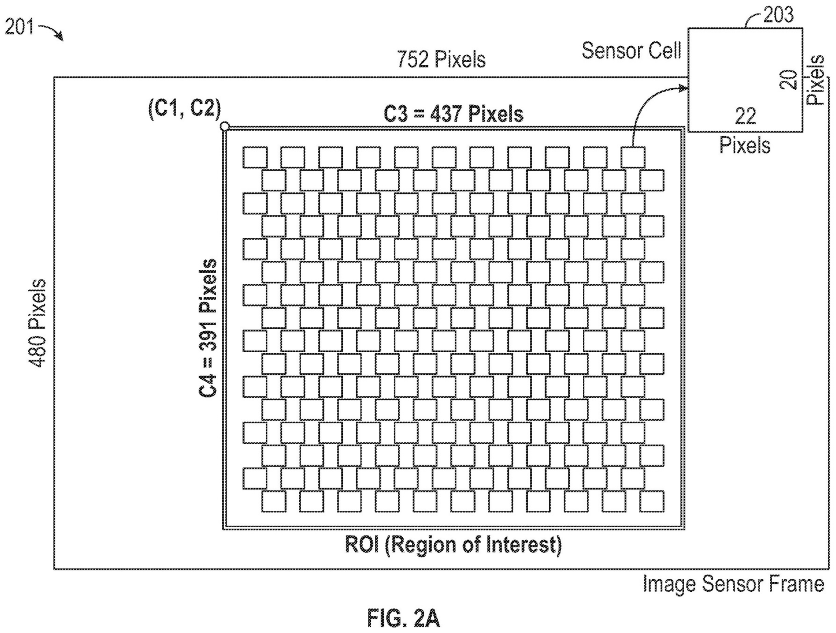

With reference to FIG. 1A, the optical core 101 can include a plurality of cameras 110, such as a first camera 110A and a second camera 110B. A camera 110 may include an image sensor 134 configured to capture a single image or a stream of images. In some examples, a camera 110 may include a CMOS sensor. An image sensor 134 may include a sensor array. The sensor array may include a plurality of sensor cells. Each sensor cell may include a plurality of pixels. FIG. 2A illustrates an example layout 201 of an example image sensor 134 including a sensor array. In the illustrated example, the sensor array includes a plurality of sensor cells 203 of 20 x 22 pixels and a total number of pixels are 480 x 752 pixels for the image sensor 134.

Each of the plurality of cameras 110 may be associated with each of a plurality of MEMS mirrors 116A, 116B, such that light reflected from a MEMS mirror 116A is monitored by a camera 110A and light reflected from a MEMS mirror 116B is monitored by a camera 110B. FIG. 2B illustrates an example correlation of an image sensor layout 212 with a MEMS mirror layout 210. For example, a MEMS mirror layout 210 may have a similar arrangement to an image sensor layout 212 such that each image sensor cell 214 is correlated with a specific MEMS micro-mirror 216 of the MEMS mirror layout 210. This correlation allows the system to extract data from an image on the image sensor of the camera 110 to extrapolate information related to the performance of the MEMS mirror 116A, 116B. Thus, each camera 110A, 110B can extract both position and intensity data associated with a generated image 136 from an associated control beam 106A, 106B and MEMS mirror 116A, 116B respectively. This data may be utilized to affect operation of each MEMS mirror 116A, 116B and subsequent operation of the OCS device, as will be described in further detail herein.

The optical switch may additionally include and/or be associated with one or more hardware processors. The one or more hardware processors may be referred to herein as a controller 111, such as illustrated in FIG. 1A. The one or more hardware processors may be part of an optical switch and/or associated with a remote system or device in communication with the optical switch. The one or more hardware processors may be a combination of on device and/or remote processors. In some examples, one or more processes, control signals, and/or calculations may be performed by dedicated on device processors and other processes, control signals, and/or calculations may be performed by remove processors. In some examples, a plurality hardware processors may be configured to work in conjunction with each other and/or in parallel to produce a result. The one or more hardware processors may be configured to, in some non-limiting examples, analyze optical and/or electronic signals, determine operational parameters of the optical switch, and generate control signals to operate aspects of the optical switch, such as positions of the MEMS mirrors or an intensity of control beams.

### Example Beam Control with Intensity Monitoring

An OCS device may be configured to establish a connection between an input optical fiber and an output optical fiber based on monitoring of an out of band control beam, such as may be generated by an injection module 108A, 108B such as described with reference to FIGS. 1A-1D. As noted above, a position of the control beam on an image sensor is correlated with a location of the communication beam on a MEMS mirror array. Thus, monitoring the positioning and/or intensity of the control beam on the image sensor can be utilized to optimize the positioning of the communication beam on an associated MEMS mirror array. Advantageously, optimizing positioning of the communication beam on each of the MEMS mirrors in the system may facilitate a higher quality and more accurate connection between an optical input and optical output.

In various systems and methods disclosed herein, a position of the control beam can be utilized to determine a correction to a MEMS mirror position, such as may be accomplished by actuation of one or more of a plurality of actuators associated with a particular MEMS mirror. Additionally or alternatively, an intensity of a centroid of a control beam on an image sensor may be used to improve functioning of the beam control process by, for example, identifying whether an intensity of the control beam should be modified to reduce error in the position determination process. Other applications of control beam monitoring are also possible.

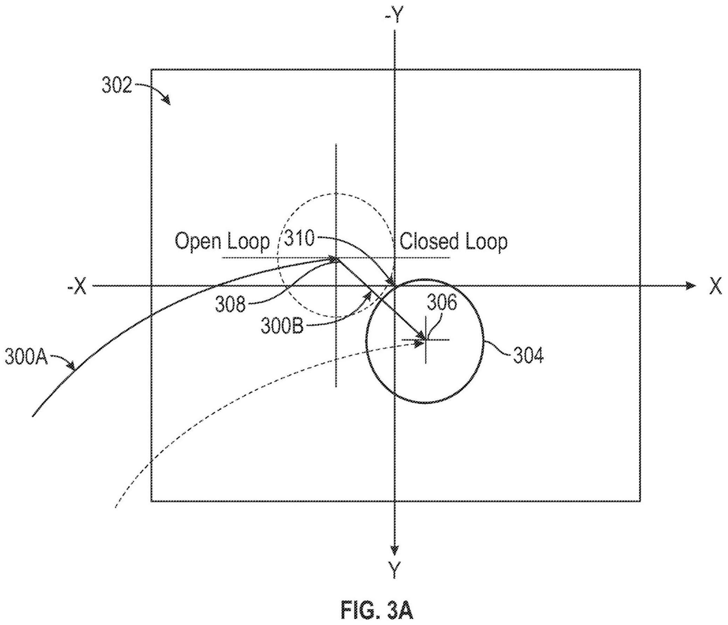

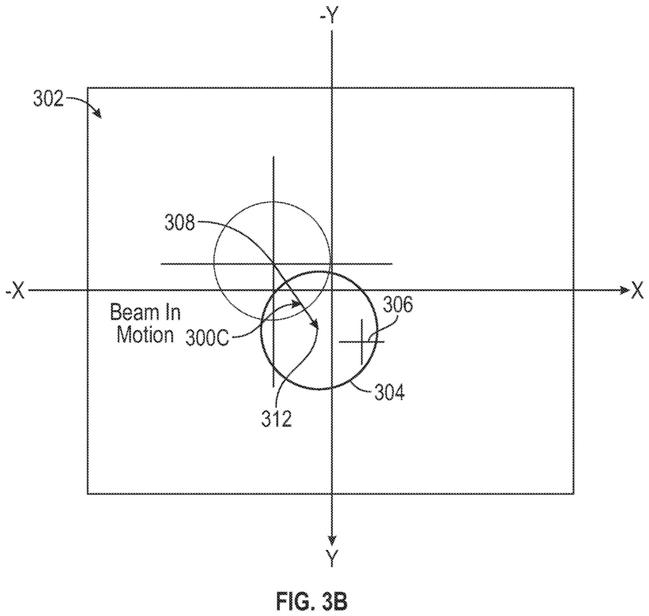

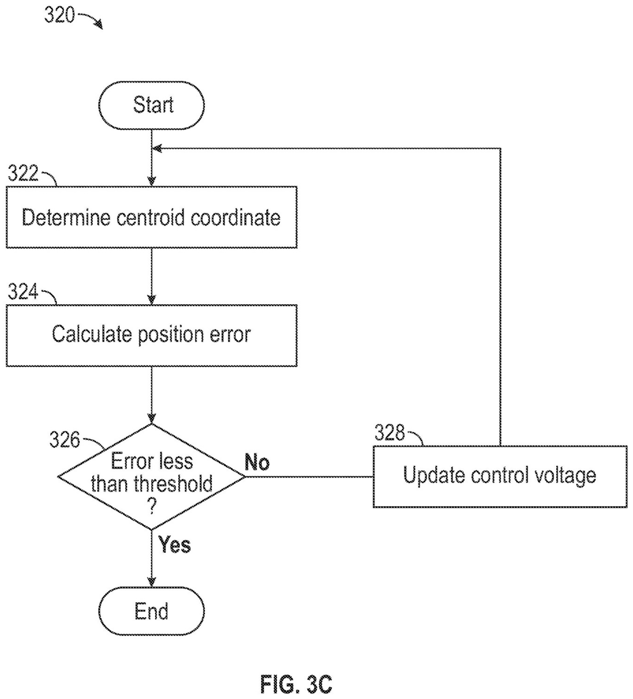

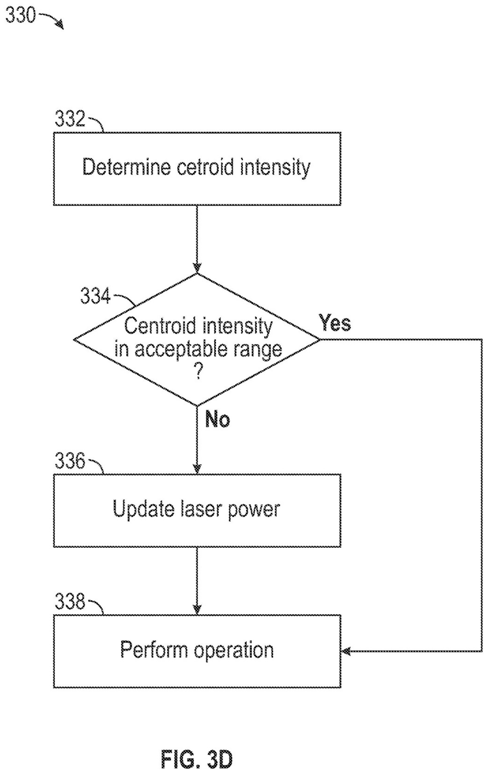

FIGS. 3A and 3B are illustrations of example movement of a control beam on an image sensor cell during an example beam control operation, such as described herein. FIG. 3C illustrates an example aspect of a beam control process using a position of a control beam on an image sensor cell, such as illustrated in FIGS. 3A and 3B. FIG. 3D illustrates an example beam control process using an intensity of a control beam on an image sensor cell.

A beam control process may involve monitoring a position of a control beam by a camera image sensor capturing a spot or centroid of the control beam on a number of pixels of the image sensor, to enhance beam coupling from an input fiber to output fiber.

For example, as shown in FIG. 3A, a beam control process may involve an open loop step and a closed loop step. In particular, when a connection is to be established (such as from an input fiber to an output fiber), there are an open loop step and a closed loop step that may be utilized to improve alignment of the communication beam and enhance the connection. In the illustration of FIG. 3A, a movement 300 (as illustrated in parts 300A and 300B) of a control beam with respect to an image sensor 302 (such as an image sensor cell) is shown. During an open loop step, a control beam is moved along example path 300A to a position 308. During a closed loop step, the control beam is moved along path 300B to position 306. Circle 304 illustrates an approximate spot size of the control beam, with the position 306, 308 being associated with a centroid of the spot.

For purposes of calculating an error in control beam location, a total area of the sensor cell 302 may be defined in terms of number of pixels of the sensor cell and a position of the centroid may be defined in terms of number of pixels in cartesian coordinates with a defined center 310 of the sensor cell 302 being an origin of the coordinate system. For example, where a sensor cell 302 is 20 by 22 pixels, the origin 310 may be a location that is 11 pixels from each of a first set of opposing edges of the sensor cell having 22 pixels between each of the first set of opposing edges and 10 pixels from each of a second set of opposing edges of the sensor cell 302 having 20 pixels between each of the second set of opposing edges. However, other origin locations and other sensor cell sizes are also possible. In the example of a sensor cell 302 having 20 by 22 pixels, a centroid location 308 may be, for example, (-2.750, -1.375). Similarly, a centroid location 306 may be (+1.250, +2.875). Thus, determining the difference between these locations gives an error between location 308 and location 306 of (+4.000, +4.250).

An open loop step may involve a process whereby the MEMS mirrors are tilted in an appropriate direction based on calibration data. For example, during an open loop step, a controller 111 may apply pre-calibrated voltages to the MEMS mirror actuators for each of the first and second MEMS mirror arrays to achieve at least an approximate alignment of the communication and/or control beam with a desired output fiber based on information in the communication signal in order to establish the desired connection between an input fiber and output fiber. It is of note, however, that the open loop set points may not necessarily place the beam in an optimal position due to several possible reasons that may result in slight drift of the beam from a calibrated open loop position, such as fiber to lens interface, anti-reflective (AR) coating of the lens, beam combiner coating, AR coating of the MEMS window, mirror reflectivity, beam splitter coating, mirror curvature, curvature of the beam combiner, curvature of the MEMS die, curvature of the beam splitter, and high voltage accuracy. Thus, a closed-loop step can be utilized to correct for the drift to optimize or enhance the connection.

A closed loop step may involve a process whereby the control beam enhances or optimizes the connection by attempting to correct error in the alignment. For example, during a closed loop step, the controller 111 may move a control beam to a pre-determined optimal position on an associated image sensor, which may be associated with a pre-determined optimal position on a MEMS mirror. The closed loop system may additionally continuously or periodically or otherwise monitor the position of the control beam (such as by checking if a centroid of the control beam is still creating the same spot on the same set of pixels on the image sensor) and continuously or periodically or otherwise update the orientation of the MEMS mirror accordingly by applying a correction voltage to the plurality of mirror actuators. This process may be done for each image sensor and associated MEMS mirror to ensure enhanced alignment and/or an optimal or enhanced connection between the input fiber and output fiber.

The pre-determined optical position of the closed loop step may sometimes be referred to herein as a closed loop setpoint. The setpoint may be determined based on a priori calibration information. In some examples, the setpoint may additionally or alternatively be determined, updated, or set by learned information (such as by an AI or machine learning process), user input or other source of information. The setpoint may be a location on the sensor cell 302 and/or associated orientation of a MEMS mirror at which an alignment or connection between an input fiber and an output fiber is predicted to be optimized, enhanced, or otherwise improved over another location on the sensor cell 302. There may be a different set point for each MEMS mirror of each MEMS mirror array and/or each sensor cell of each image sensor in the optical switch device.

It is of note that FIG. 3A illustrates a situation in which an applied correction generates a movement 300B from a first location 310 to a setpoint location 306. However, as illustrated in FIG. 3B, a calibrated or applied voltage may not bring a centroid of the control beam to the setpoint location 306, but rather another location 312 different from the setpoint location 306. In this case, a beam correction may continue until the calculated error between the setpoint and current location is less than a threshold. The threshold may include 1/16 pixels or another value. In some examples, the threshold may be associated with and/or set for a connected signal. The threshold may be configured to remain the same and not fluctuate over time.

FIG. 3C shows an example closed loop correction process 320, such as may be part of a closed loop process described above. For example, a controller 111 may determine centroid coordinates at a block 322. The centroid coordinates 322 may be in relation to a coordinate system defined by the area of a sensor cell, such as sensor cell 302, which may be part of an image sensor. The coordinates may be associated with an orientation of a MEMS mirror of a MEMS mirror array on which a communication beam interacts or reflects from as part of a beam path between an input fiber and output fiber. The coordinates may additionally be associated with a set of voltages applied to actuators for the MEMS mirror in order to accomplish the particular orientation of the MEMS mirror. The coordinates may be in reference to a reference point on the sensor cell, such as center point of the sensor cell or another selected point on the sensor cell or image sensor array in general (which may serve as an origin point of a defined coordinate system).

At a block 324, the controller 111 may calculate a position error of the centroid of the control beam. The position error may be a difference in the defined coordinate system of the sensor between the determined centroid coordinate from block 322 and a predetermined setpoint. The predetermined setpoint may include a location on the sensor cell determined by a previous calibration of the system to optimize or enhance the connection between the input fiber and output fiber as a result of an optimal orientation of the MEMS mirror.

At a block 326, the controller 111 may determine whether the position error calculated at block 324 is within an acceptable threshold. The threshold may be predetermined, set by a user, learned by the system, or otherwise determined. The threshold may be based on operational parameters, such as data loss in the communication beam or other factors. The threshold may be based on a spot size of the control beam on the sensor cell. In some examples, the threshold can include, but is not limited to, less than 1 pixel. If the error is less than the threshold, the process may be completed. However, the controller 111 may continue to monitor the error for drift of the centroid from the final position and restart the correction process if a subsequent error increases beyond the threshold. If the error is greater than the threshold, the controller 111, at a block 328, may update a position of the MEMS mirror by modifying a control voltage or set of control voltages to the MEMS mirror actuators in order to change the orientation of the MEMS mirror and thus, the control beam centroid location (and associated communication beam path).

In some examples, a controller 111 of the disclosed OCS system and methods may keep track of the history of open-loop and/or closed-loop positions and learn patterns to recalibrate the system, shortening a time until connection optimization time, and thus, shortening switching time. The system can decide if set points, such as open-loop set points, should and/or can be re-set. For example, the system may utilize AI techniques to make the determination for recalibration. If so, the system may re-write one or more of the set points. This type of recalibration would, advantageously, obviate or reduce the need for closed-loop optimization and/or shorten the time for that optimization, thus shortening switching time. Since beam position is corrected by the closed loop control in order to cancel error during the open loop switching, if the closed loop correction can be minimized or eliminated by AI based monitoring, then the total switching time can be minimized or reduced.

FIG. 3D shows an example additional process 330 for improving beam control, such as a beam control process discussed with reference to FIG. 3C. In the process 330, a controller 111 may monitor an intensity of a control beam on the image sensor to determine whether an update to an operational parameter of a beam control process needs updating, such as an output power of a control beam. For example, at a block 332, a controller 111 may determine an intensity on the sensor cell of the centroid of the control beam. At a block 334, the controller 111 may determine whether the determined intensity is within an acceptable range. The acceptable range may be based on a comparison of the determined intensity to a starting intensity of the control beam (such as at the beginning of life of the injection module and/or optical switch). The acceptable range may be additionally or alternatively be based on a comparison of the determined intensity to an expected intensity or other value. If the determined intensity fails to fall within the acceptable range, the controller 111 may move to block 336. At a block 336, the controller 111 can update an output power of the injection module associated with the monitored control beam based on the determined intensity from block 332. If the determined intensity falls within the acceptable range, the controller 111 may move to block 338 to complete an operation, such as a beam control process 300 such as discussed with reference to FIG. 3B or other operation, such as an end of life determination, as will be discussed in further detail herein.

This process may be completed for each control beam within the optical switch. The process 330 may be performed continuously, periodically, on demand, as part of, in parallel and/or sequentially with process 300.

### Example Operational Performance Monitoring of an OCS device

A controller 111 may utilize some combination of intensity and/or position tracking of a control beam on an image sensor to track operational performance of the OCS system and/or affect an operation of the OCS system. For example, as noted above in reference to FIGS. 3A-3C, a controller 111 may utilize some combination of intensity and/or position tracking of one or more control beams to affect an orientation of one or more associated MEMS mirrors for alignment and optimization of a connection between an input fiber and output optical fiber. However, position and/or intensity tracking may be utilized for other operational performance monitoring, such as end of life (EOL) tracking of the OCS system or aspects thereof, calibration and/or recalibration of the OCS system or aspects thereof, prediction of future degradation of the OCS system or aspects thereof, determination and/or prediction of insertion loss (IL) or the optical power loss in the network due to the OCS device or system, improvement and/or prediction of switching time of the OCS system, tracking and/or determination of repeatability of performance of the OCS system or aspects thereof, and/or other performance monitoring or improvements. For example, an OCS system may use high resolution image sensors to increase precision of beam position (and/or beam intensity), monitor each pixel's intensity to detect variations in beam positioning accuracy over time, monitor the average intensity of a set of pixels, train an AI model using inputs with different variations in degradations of the beam location and/or intensity to predict further degradation over time and issue warnings, employ AI to predict, for example, a set of potential degradations due to an area (for example, a corner) of the MEMS chip, check corner micro-mirrors of a MEMS mirror array (corresponding to the highest tilt angle and the longest beam path) for any anomalies and issue appropriate alarms, such as when areas are not in use.

In contrast to the present system, traditional optical switches use photodetectors on each channel to detect the signal beam, which may be, for example, in a wavelength range between 1260-1640 nm. However, utilizing individual photodetectors to detect signal degradation has disadvantages, including but not limited to, that the end signal beam is not necessarily at full strength after the connection is completed. For example, since a portion of the signal is tapped (e.g., 5%), the transmitted signal is reduced. Over the course of a network, this may result in non-negligible insertion loss. Additionally, utilizing individual photodetectors for each channel can be very expensive to implement. Advantageously, tracking a separate control beam with respect to both location and intensity can help to detect the degradation the signal beam over time without directly impacting the signal. This type of degradation tracking is not able to be implemented on a traditional system.

In some examples, a controller 111 may track an approximate time until the end of life of the OCS device or an aspect or component of an OCS device. For example, a controller 111 may compare, continuously or non-continuously, a control beam intensity to a look-up table of beam intensity for each possible connection between input fibers and output fibers at beginning of life (BOL) until end of life (EOL). This comparison may, advantageously, allow the controller 111 to determine a decline of a connection and/or predict a time until EOL of the connection. The controller 111 may then issue an alarm or alert when the controller 111 determines that a beam intensity is declining in an unacceptable manner, such as by degrading too quickly or is getting too close to a predicted EOL. Thus, the controller 111 may be able to alert a user before a connection degrades unacceptably due to a change in one or more operational performance parameters and/or perform an operation, such as a recalibration or a partial recalibration if needed and/or helpful for the cause of the degradation.

Operation performance parameters of an OCS system may include, but are not necessarily limited to: insertion loss (IL) (or the optical power loss in the network due to this device (OCS)), which is measured in dB, switching time (or how fast the connection is established, after the switch commend is issued, which is measured in milliseconds), repeatability (or how performance parameters vary over repeated connections, such as how much does IL vary over many repetitions). At a test of the OCS system, these operation performance parameters are measured to ascertain if the switch meets desired specifications. So, at final test of an OCS system, some or all of these parameters show up in a Gaussian curve in relation to other OCS systems. For example, an OCS with 100 incoming and 100 outgoing fibers has 10,000 possible any-to-any permutations, and each connection will have an IL, switching time, and repeatability parameter value. For example, if the max IL for the switch is 3 dB, the distribution for all possible connections could be 1 dB to 3 dB.

In a large network, such as a data center network or an AI cluster network, there are different number of "hops" -that is data can make varying hops when it leaves the source server and reaches the destination server. The present system may store all the port-to-port connection performance data in memory inside the optical switch. Thus, when a new connection is to be made, the embedded logic (using AI) checks all available connections and prioritize the best connections, depending on, for example, whether a low IL connection is best, due to many hops to destination and the same for switching time to prioritize whether certain connection would be better if faster (for example, connecting memory). In some examples, an AI agent learning the patterns (for example, port x requires a fast connection 90% of the time) for the network may help make quicker decisions and improve the operation of the network.

### Example Calibration of an OCS device

One of the most difficult and time-consuming manufacturing step in OCS manufacturing is calibration. Calibration may involve the process of initially determining in what direction or orientation a pair of micro-mirrors (such as on a first and second MEMS mirror array) needs to be tilted to establish a connection between each pairing of input fibers and output fibers. The orientation of a mirror is established, at least in part, by actuation of a set of actuators associated with that mirror. The degree of actuation of each of the actuators, and subsequently, the orientation of the mirror, is associated with an amount of voltage applied to the actuator. In at least one configuration of an OCS system, each mirror on a MEMS mirror array has four actuators, so it is important to know the voltage to be supplied to each actuator to tilt the mirror in the right direction and at the correct angle for establishment of a connection. This is not straightforward to determine and is specific to each OCS system, because the silicon structures of each mirror and its actuators can be slightly different across OCS systems (due to the fact that, in at least some implementations, MEMS micro-mirrors require deep reactive ion etching or DRIE, which does not produce perfectly uniform structures). Therefore, there is a time-consuming, iterative process to come up with the precise voltages for each actuator in each potential connection between input fibers and output fibers. For example, a 100 by 100 OCS system has 800 mirror actuators to calibrate, which could take a non-insignificant amount of time to calibrate (e.g. on the order of hours).

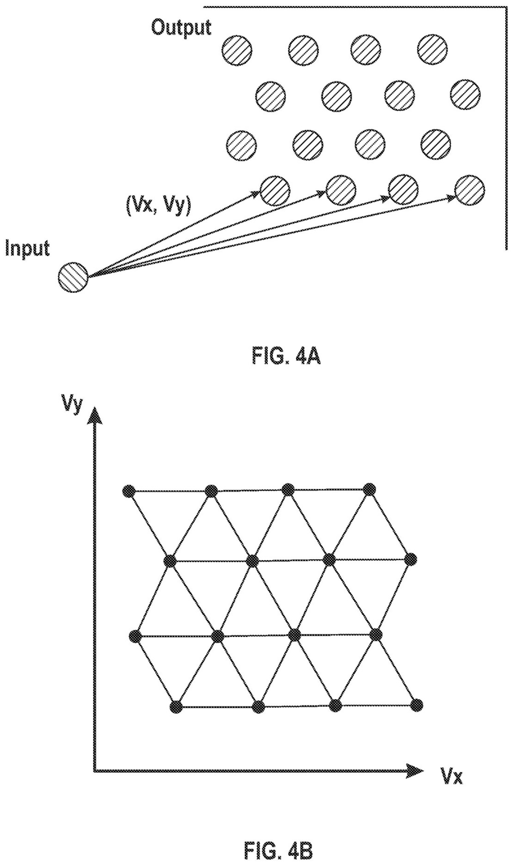

As referenced above, each image sensor cell is associated with a particular MEMS micro mirror. Since the positions of the MEMS micro mirrors correspond to the position a particular fiber, each image sensor cell in the array corresponds to a particular input or output fiber and the location of the centroid of the control beam on a particular image sensor cell corresponds to an orientation of that particular MEMS micro mirror. As shown in FIG. 4A, each input micro mirror may have a unique set of voltages applied to its associated actuators to establish a connection to a particular output micro mirror of an output MEMS mirror array. Thus, each input micro mirror, when optimally oriented to a particular output micro mirror, may cause a control beam centroid to illuminate a particular location on an image sensor cell that can be monitored and used as a means to calibrate the system for optimizing connections between input and output fibers. The resulting calibration may include a plurality of setpoints (such as open-loop or closed loop setpoints described herein) relating to locations on each image sensor cell associated with an optimal version of a particular connection between an input and output fiber.

It is important to perform such a calibration because, while the position of mirrors in each MEMS micro mirror array may be evenly distributed, as referenced above, other factors can impact the response of the actuators for each MEMS micro mirror in response to an applied voltage. For example, the location of the mirror on the MEMS die, the width of the beam structure that holds the mirror, the length of the actuator leads, HV driver variations, and the like can result in a unique response to applied voltages for each MEMS micro mirror. For example, because each MEMS chip (die) is slightly different, so too the set of cells representing the areas for each mirror (for calibration optimization) can be different. Thus, a voltage given to a mirror actuator on, for example, an input side may not produce the same amount of change in orientation as when applied to a different mirror actuator on the output side.

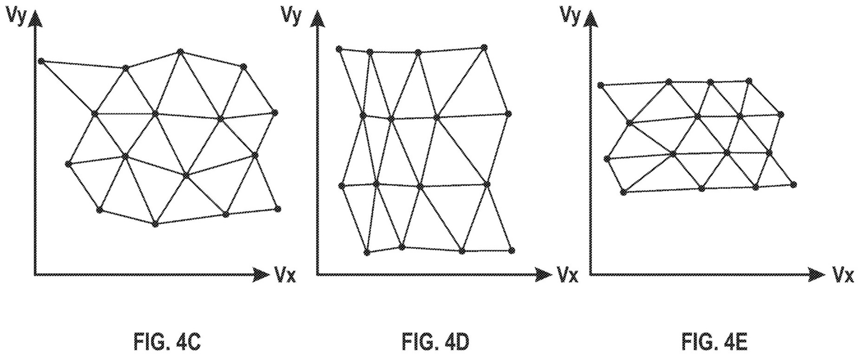

Thus, a voltage map for a mirror j would be different from that for a mirror i and voltage map data for one mirror cannot be applied to other mirrors. As a result, the calibration to find a connection condition in voltage space needs optimization for each mirror on the input side to all the mirrors on the output side (which may take a very long time). As shown in FIG. 4A, each input micro mirror i may have a unique set of voltages (Vx, Vy) to establish a connection to each of a plurality of output micro mirrors of an output MEMS mirror array. FIGS. 4B-4E illustrate example mappings of voltages with respect to x and y orientations of each of a plurality of mirrors. In particular, FIG. 4B illustrates an example mapping of voltages given to a set of mirror actuators where voltages for an input and output mirror are similar and predictable. In contrast, and as is more typical, FIGS. 4C-4E illustrate example mappings of voltages given to a set of mirror actuators where voltages for an input and output mirror are dissimilar.

Actual voltage data can be distributed as in FIG. 4C, or spread in y direction as in FIG. 4D or compressed in y direction as is FIG. 4E. When the width of the beam that support the mirror structure or the gimbal is wider than the designed value, then the mirror needs higher voltage to reach all the opponent mirrors. When the width of the combs (stationary and movable) is thinner than the designed value, which increases the width of the gaps between the combs, then the mirror needs higher voltage to reach all the opponent mirrors.

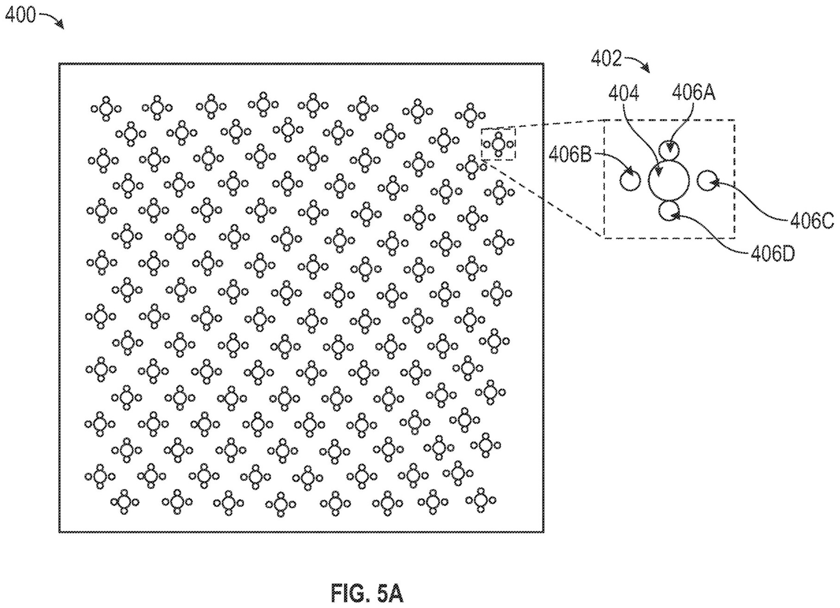

As noted above, the calibration process involves iteratively optimizing alignment of the connections from the plurality of input fibers to each of the plurality of output fibers. This alignment may be monitored and/or calibrated using a location of a centroid of a control beam on an image sensor. FIG.5A shows example calibration information 402 for an example MEMS mirror array of an OCS device for a connection from an example MEMS micro- mirror on the input side to an array 16x16 MEMS micro-mirrors on the output side. In particular, the calibration information 400 includes images 402 of a plurality of locations 404, 406 of a control beam on each image sensor cell of an output side image sensor as a result of a change in orientation of an input side MEMS micro-mirror (due to different applied voltages to actuators of a single MEMS micro-mirror). Thus, FIG. 5A shows a visual image of the responsivity of each mirror actuator for a particular MEMS micro mirror to an applied voltage.

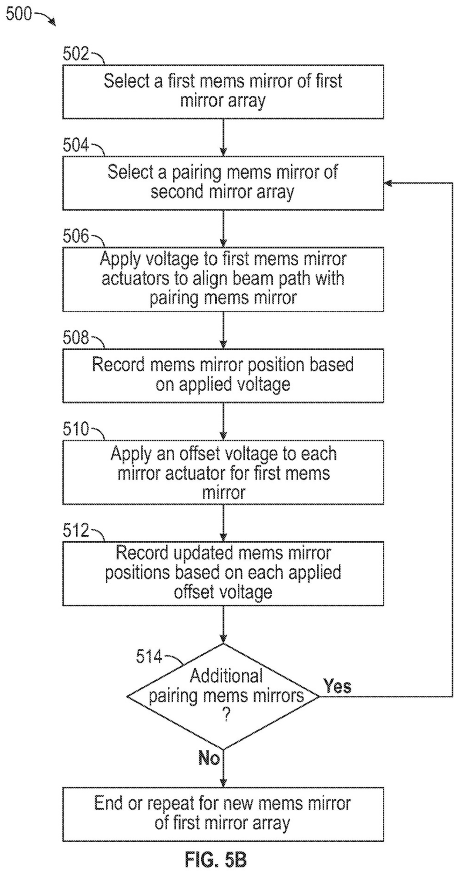

FIG. 5B is an example process 500 that may be implemented by a controller 111 of the system to generate calibration information, such as illustrated in FIG. 5A. In the example calibration process 500, a controller 111 may select a first MEMS mirror of a first MEMS mirror array to calibrate. The first MEMS mirror may be part of an OCS system having at least two MEMS mirror arrays, such as an input side MEMS mirror array and an output side MEMS mirror array. The input side MEMS mirror array can have a plurality of MEMS micro-mirrors in an array where each MEMS micro-mirror correlates to a different input fiber. The output side MEMS mirror array can additionally have a plurality of MEMS micro-mirrors in an array where each MEMS micro-mirror correlates to a different output fiber. A connection between an input fiber and an output fiber may involve aligning a specific MEMS micro-mirror of the input side MEMS mirror array with a specific MEMS micro-mirror of the output side MEMS mirror array. At block 502, the controller 111 may select a first MEMS mirror of an input side mirror array to calibrate with each MEMS micro-mirror of an opposite side MEMS mirror array (or vice versa - an output side MEMS micro-mirror may be selected to calibrate with each input side MEMS micro mirror).

At a block 504, the controller 111 may select a pairing MEMS mirror of a second mirror array to calibrate the connection between the first MEMS micro mirror and the pairing MEMS mirror. In examples where the first MEMS mirror is on an input side, the pairing MEMS mirror may be on the output side. Similarly, where the first MEMS mirror is on an output side, the pairing MEMS mirror may be on the input side.

At a block 506, the controller 111 may apply a voltage to actuators of the first MEMS mirror in order to orient the first MEMS mirror at least roughly establish a connection with the pairing MEMS mirror when light is directed towards the first MEMS mirror from, for example, an injection unit or input fiber, such as described above with reference to FIGS. 1A-1D. The applied voltage may be an approximation or guess, based on previous calibration information for similar devices and/or the device being calibrated, based on user approximation, or based on another source of information or experimentation. The applied voltage may include a set of voltages to be applied to a set of actuators. The applied voltage may be based on one or more voltages recorded during a calibration process. For example, a MEMS mirror may include a set of four actuators, such as described with reference to FIGS. 1A-1D. The applied voltage at step 506 may be a set of voltages applied to each (or at least some) of the four actuators in order to effect the change in orientation of the first MEMS mirror.

At a block 508, the controller 111 may record a resulting position of a control beam on an image sensor cell after the voltage is applied at block 506. As discussed previously, an OCS device may include an injection unit corresponding to each MEMS mirror array, wherein each injection unit is configured to produce a control beam. Each control beam is configured to reflect off of an associated MEMS mirror array towards an image sensor such that a position of a centroid of the control beam on the image sensor is associated with an orientation of a MEMS mirror of the associated MEMS mirror array. An example position of a centroid on an image sensor cell after an initial applied voltage is illustrated at location 404 of FIG. 5A.

At a block 510, the controller 111 may apply an offset or a series of offset voltages to each mirror actuator of the first MEMS mirror. For example, where there are four mirror actuators, the controller 111 may further apply a set offset (for example, 1 volt or more or less voltage) to each of the four actuators for a MEMS mirror. This may be done in sequence so that, as a result of applying each offset, the position of the centroid may move in two dimensional space on the image sensor cell to, for example, locations 406A, 406B, 406C, and 406D at top, bottom, and left and right lateral locations relative to the starting position of the centroid of the control beam as shown in FIG. 5A. Each of the locations 406A, 406B, 406C, and 406D nay be differently offset in two dimensional space on the image sensor despite having the same amount of voltage offset applied. This is due to reasons such as those described above, such as with relation to manufacturing differences. Concurrently and/or sequentially with application of these voltages, the controller 111 may record the updated positions, such as at a block 512. Based on the locations 406A, 406B, 406C, and 406D in relation to location 404, the system may be able to generate a voltage mapping for a particular connection.

At a block 514, the controller 111 may determine if there are more pairings to be calibrated with the second MEMS mirror array. For example, the controller 111 may determine if an additional MEMS mirror in the second MEMS mirror array has not yet been through the process 500. If there are additional pairings available, the controller 111 may repeat the process with a new pairing MEMS mirror at block 504. If there are no additional pairings, the controller 111 may end the process to complete calibration of the first MEMS mirror of the first MEMS mirror array and/or repeat process 500 for each additional MEMS mirror of the first MEMS mirror array. Thus, the system may iteratively progress through each connection, generating a voltage mapping for each input MEMS micro mirror to each output MEMS micro mirror for a particular OCS device.

### Example Improved Calibration of an OCS device

As calibrating an OCS device can be a labor and time intensive process, systems and methods disclosed herein may utilize artificial intelligence or machine learning techniques to reduce processing and/or calibration times. For example, an AI model can be used to generate calibration information for a particular OCS device based on, at least in part, calibration data collected from a plurality of different OCS devices. Thus, with a trained AI model, a full iterative calibration process may not be necessary to complete for every OCS device manufactured. This can significantly improve manufacturing times and reduce the time needed to prepare a device for market.

Inputs to an AI model may include all or at least some factors that affect the mirror angle/voltage relationship, such as those noted above. For example, factors can include the location of the mirror on the MEMS die, the width of the beam structure that holds the mirror, the length of the actuator leads, HV driver variations, and the like. Inputs can additionally or alternatively include calibration data or partial calibration data, such as one or more voltage maps, such as referenced in FIGS. 4A-4E and/or one or more visual representations of a voltage map described with reference to FIG. 5A.

An AI model may be configured to analyze partial calibration data to generate a calibration prediction. For example, in order to have fewer iterations of a calibration process such as described with reference to FIG. 5B, an AI model may learn from each data point related to voltage response of the MEMS mirrors as the calibration process progresses to predict other voltage responses of additional components of the OCS system. For example, an AI model may learn about calibration data from one area of the MEMS die and apply that information to other areas of the MEMS die, thus learning form the result of mirror i to predict a solution for mirror j. This prediction may gain precision with a greater amount of collected calibration data. However, such a learning model has the potential to significantly decrease overall calibration times.

Additionally, or alternatively, an AI model may learn from calibrations completed on other OCS devices in order to aid learning. For example, an AI model may be trained using a plurality of calibrations from a plurality of training devices and/or manufacturing information related to the training OCS devices. The AI model may then be configured to take inputs, such as partial calibration data for a test OCS device and/or hardware specifics relevant to manufacturing of the OCS device (such as location of the mirror on the MEMS die, the width of the beam structure that holds the mirror, the length of the actuator leads, HV driver variations, and the like) in order to generate a predicted calibration and/or voltage mapping.

### Artificial Intelligence Considerations for Networking Infrastructure

High performance computing network infrastructure increasingly have needs to higher processing speeds, lower latency, and greater bandwidth. Optical Circuit Switches (OCS) in conjunction with artificial intelligence (AI) can offer advantages in terms of performance and efficiency over traditional switches.

However, AI applications, particularly those involving heavy AI model training needs, can place significant demands on data center infrastructure due to, for example, a high volume of training data, low latency in data transmission in order to meet real time processing requirements of the network, high bandwidth to manage inter-node communication relating to large-scale AI models and machine learning, energy efficiency in order to manage increased computational and power costs, and AI related infrastructure requirements (such as related to whether a particular AI workload is more computationally intensive, memory intensive, or a mix).

An OCS system can address many of these demands by, for example, providing a higher bandwidth and data transfer speed than in traditional switches, having lower latency due to direct optical paths between nodes, allowing for growing AI workloads by having scalability in the addition of new circuits without complex reconfigurations or for providing short term or temporary circuits, having improved energy efficiency over traditional switches to manage computational and power costs of AI, allowing for superior reconfigurability of a network over traditional switches by allowing for easier and more dynamic reconfiguration of optical paths in real time in order to optimize network performance, and ability to handle heavy AI training workloads by providing high-bandwidth, low-latency connection. Thus, OCS systems are especially advantageously beneficial to implementing of the rapidly evolving field of AI in application to high performance computing network infrastructure.

### Additional Aspects

Disclosed herein are additional non-limiting example aspects of systems and methods disclosed. Any of the disclosed systems or devices may utilize any of the methods disclosed herein and any of the disclosed methods may be applicable to any of the disclosed systems or devices described herein or other similarly situated systems or devices, such as other optical systems or optical circuit switches. The aspects are meant to be non-limiting and aspects may be combined in whole or in part. In some implementations, aspects may utilize fewer or different elements than explicitly discussed.

Aspect 1. An optical switch for aligning at least one input optical communication signal from at least one input fiber of an input fiber bundle with at least one output fiber of an output fiber bundle, said optical switch comprising: a light source configured to produce a control beam; a MEMS mirror array; a beam combiner configured to combine a communication beam and the control beam into a co-linear path towards a MEMS mirror of the MEMS mirror array; a beam splitter configured to split the communication beam and the control beam after reflection by the MEMS mirror; an image sensor positioned to capture an image of the control beam after interacting with the beam splitter; one or more hardware processors in communication with the image sensor and configured to: determine an intensity of a centroid of the control beam based on the image; and update an output intensity of the light source based at least in part on the determined intensity of the centroid of the control beam to generate an updated control beam from the light source.

Aspect 2. The optical switch of Aspect 1, wherein the one or more hardware processors are further configured to: determine a position of a centroid of the updated control beam on the image sensor; and optimize an alignment of the communication beam with the at least one output fiber of the output fiber bundle based at least in part on the position of the centroid.

Aspect 3. The optical switch of any of Aspects 1-2, wherein the one or more hardware processors are configured to optimize the alignment by updating an orientation of the MEMS mirror.

Aspect 4. The optical switch of any of Aspects 1-3, wherein the one or more hardware processors are configured to update the orientation of the MEMS mirror by activating at least some of a plurality of mirror actuators.

Aspect 5. The optical switch of any of Aspects 1-4, wherein the position of the centroid of the control beam on the image sensor corresponds to a position of a centroid of the communication beam on the MEMS mirror.

Aspect 6. The optical switch of any of Aspects 1-5, wherein the beam splitter is configured to reflect the communication beam towards another MEMS mirror.

Aspect 7. The optical switch of any of Aspects 1-6, wherein the one or more hardware processors are configured to: identify a desired output optical fiber; determine an initial position of the MEMS based at least in part on a location of the desired output optical fiber; and set an initial orientation of the MEMS mirror based on the initial position, wherein the determined position of the centroid of the control beam on the image sensor is based on the initial orientation of the MEMS mirror.

Aspect 8. The optical switch of any of Aspects 1-7, wherein an orientation of the MEMS mirror is based on a set predetermined applied voltages to each of a plurality of MEMS mirror actuators.

Aspect 9. The optical switch of any of Aspects 1-8, wherein the one or more hardware processors are configured to optimize the alignment by: comparing the position of the centroid of the control beam to a pre-determined position; and updating a position of the MEMS mirror to move the position of the centroid of the control beam towards the pre-determined position.

Aspect 10. The optical switch of any of Aspects 1-9, wherein the one or more hardware processors are configured to: compare the intensity to a lookup table to determine an approximate time until end of life of the optical switch.

Aspect 11. The optical switch of any of Aspects 1-10, wherein the one or more hardware processors are configured to: generate an alert based on the approximate time until end of life of the optical switch.

Aspect 12. The optical switch of any of Aspects 1-11 further comprising: an input configured to receive the input fiber bundle.

Aspect 13. The optical switch of any of Aspects 1-12 further comprising an output configured to receive the output fiber bundle.

Aspect 14. The optical switch of any of Aspects 1-13, wherein the image sensor comprises a CMOS camera sensor.

Aspect 15. The optical switch of any of Aspects 1-14, wherein a collimator configured to collimate the at least one input optical communication signal to produce a communication beam.

Aspect 16. The optical switch of any of Aspects 1-15, comprising a screen configured to produce the image when interacting with the control beam.

Aspect 17. A method of aligning at least one optical input with at least one optical output, the method comprising: determining an intensity of a centroid of a control beam of an optical switch on a camera sensor of the optical switch, wherein a location of the centroid on the camera sensor is associated with a location of a centroid of a communication beam on a MEMS mirror of the optical switch; updating an output intensity of the control beam based at least in part on the determined intensity of the centroid of the control beam to generate an updated control beam; determining a position of a centroid of the updated control beam on the camera sensor; and optimizing an alignment of the communication beam with at least one output fiber of an output fiber bundle coupled to the optical switch based at least in part on the position of the centroid of the updated control beam on the camera sensor.

Aspect 18. The method of Aspect 17, wherein optimizing the alignment comprises: comparing the position of the centroid of the control beam to a pre-determined position; and updating a position of the MEMS mirror to move the position of the centroid of the control beam towards the pre-determined position.

Aspect 19. The method of any of Aspects 17-18, wherein an orientation of the MEMS mirror is based on a set of predetermined applied voltages to each of a plurality of MEMS mirror actuators.

Aspect 20. The method of any of Aspects 17-19 further comprising comparing the intensity to a lookup table to determine an approximate time until end of life of the optical switch.

Aspect 21. The method of Aspect 20 further comprising generating an alert based on the approximate time until end of life of the optical switch.

Aspect 22. An optical switch, said optical switch comprising: a light source configured to produce a control beam; a beam combiner configured to combine a communication beam and the control beam into a co-linear path towards a MEMS mirror; a beam splitter configured to split the communication beam and the control beam after reflection by the MEMS mirror; an image sensor configured to capture an image of the control beam after interacting with the beam splitter; one or more hardware processors in communication with the image sensor and configured to: determine an intensity of a centroid of the control beam based on the image; and compare the intensity to a lookup table to determine an approximate time until end of life of the optical switch.

Aspect 23. The optical switch of Aspect 22, wherein the one or more hardware processors are configured to: generate an alert based on the approximate time until end of life of the optical switch.

Aspect 24. The optical switch of any of Aspects 22-23, wherein the lookup table comprises a plurality of beginning of life beam intensities.

Aspect 25. The optical switch of Aspect 24, wherein the lookup table comprises a plurality of beginning of life beam intensities for each connection between an input fiber and an output fiber coupled to the optical switch.

Aspect 26. [calibration using flower diagram data - flower diagram as calibration data] An optical switch for aligning at least one input optical communication signal from at least one input fiber of an input fiber bundle with at least one output fiber of an output fiber bundle, said optical switch comprising: a light source configured to produce a control beam; a beam combiner configured to combine the communication beam and the control beam into a co-linear path towards a MEMS mirror array, the MEMS mirror array comprising a plurality of mirrors arrayed in a first pattern and configured to tilt in a plurality of directions to control a path of the combined beam; a beam splitter configured to split the communication beam and the control beam after reflection by the MEMS mirror array; an image sensor configured to capture an image of the control beam after interacting with the beam splitter; one or more hardware processors in communication with the image sensor and configured to: tilt each mirror of the MEMS mirror array in each of the plurality of directions from a starting position; record a position of the control beam on the image sensor for each position of each mirror of the MEMS mirror array; align the communication beam with the of the output fiber bundle based at least in part on the recorded positions of the control beam.

Aspect 27. The optical switch of Aspect 26 further comprising a plurality of actuators configured to tilt the MEMS mirror array in response to an applied voltage.

Aspect 28. The optical switch of any of Aspects 26-27, wherein the plurality of actuators comprises four actuators.

Aspect 29. The optical switch of any of Aspects 26-28 wherein the MEMS mirror is supported by a gimbal and each of the plurality of actuators are configured to rotate the MEMS mirror about the gimbal in a different direction.

Aspect 30. The optical switch of any of Aspects 26-29, comprising an optical input configured to position optical fibers of the input fiber bundle in a second pattern, wherein the first pattern of the MEMS mirror corresponds to the second pattern of the optical input.

Aspect 31. The optical switch of any of Aspects 26-30, wherein the one or more hardware processors are configured to align the communication beam by: tilting the MEMS mirror array based on the recorded positions of the control beam and a position of the at least one output fiber to cause the communication beam to transmit towards the at least one output fiber.

Aspect 32. The optical switch of any of Aspects 26-31 further comprising: a second light source configured to produce a second control beam; a second image sensor configured to capture an image of the second control beam; an optical output configured to position optical fibers of the output fiber bundle in a third pattern; and a second MEMS mirror array configured to direct the communication beam towards the output, wherein the second MEMS mirror array comprises a plurality of mirrors arrayed in a fourth pattern corresponding to the third pattern.

Aspect 33. The optical switch of any of Aspects 26-32, wherein the one or more hardware processors are further configured to: tilt each mirror of the second MEMS mirror array in each of a plurality of directions from a second starting position; record a position of the second control beam on the second image sensor for each position of each mirror of the second MEMS mirror array;

Aspect 34. The optical switch of any of Aspects 26-33, wherein the one or more hardware processors are configured to align the communication beam further based on the recorded positions of the second control beam.

Aspect 35. The optical switch of Aspect 34, wherein the one or more hardware processors are configured to align the communication beam by: tilting the second MEMS mirror array based on the recorded positions of the second control beam and a position of the at least one output fiber to cause the communication beam to transmit towards the at least one output fiber.

Aspect 36. An optical switch for aligning at least one input optical communication signal from at least one input fiber of an input fiber bundle with at least one output fiber of an output fiber bundle, said optical switch comprising: a light source configured to produce a control beam; a beam combiner configured to combine the communication beam and the control beam into a co-linear path towards a MEMS mirror array, the MEMS mirror array comprising a plurality of mirrors arrayed in a first pattern; a plurality of actuators configured to actuate the MEMS mirror array, wherein each of the plurality of actuators are configured to tilt the MEMS mirror array in response to an applied voltage; a beam splitter configured to split the communication beam and the control beam after reflection by the MEMS mirror array; an image sensor configured to capture an image of the control beam after interacting with the beam splitter; one or more hardware processors in communication with the image sensor and configured to: for each mirror of the MEMS mirror array, collect voltage calibration data by performing steps to: select a mirror of the MEMS mirror array to test; apply a first pre-determined voltage to the plurality of actuators to approximately align the control beam with the selected mirror; record a position of a centroid of the control beam on the image sensor in response to the applied pre-determined voltage; apply a set change to the pre-determined voltage to each of the plurality of actuators; and record, for each of the plurality of actuators, a position of the centroid in response to the changed applied voltage; and align the communication beam with the at least one output fiber of the output fiber bundle based at least in part on the voltage calibration data for each mirror of the MEMS mirror array.

Aspect 37. The optical switch of Aspect 36, wherein the plurality of actuators comprises four actuators.

Aspect 38. The optical switch of any of Aspects 36-37 wherein the MEMS mirror is supported by a gimbal and each of the plurality of actuators are configured to rotate the MEMS mirror about the gimbal in a different direction.

Aspect 39. The optical switch of any of Aspects 36-38, comprising an optical input configured to position optical fibers of the input fiber bundle in a second pattern, wherein the first pattern of the MEMS mirror corresponds to the second pattern of the optical input.

Aspect 40. The optical switch of any of Aspects 36-39, wherein the set change comprises adding or subtracting 1 volt.

Aspect 41. The optical switch of any of Aspects 36-40, wherein the set change comprises adding or subtracting 5 volts.

Aspect 42. A method of calibrating an optical switch to align at least one optical input with at least one optical output, the method comprising: for a plurality of training optical switches: tilting each mirror of a MEMS mirror array of an optical switch in each of a plurality of directions from a starting position, the MEMS mirror array comprising a plurality of mirrors arrayed in a first pattern; record, for each position of each mirror of the MEMS mirror array, a position of a control beam of the optical switch on an image sensor of the optical switch to generate MEMS mirror calibration data; train a machine learning classifier to generate calibration prediction data based on the MEMS mirror calibration data for the plurality of training optical switches; for a test optical switch, generate test MEMS mirror calibration data; generate, using the machine learning classifier, a calibration prediction based on the test MEMS mirror calibration data; and calibrate the test optical switch based on the calibration prediction.

Aspect 43. The method of Aspect 42, wherein tilting each mirror of the MEMS mirror array comprises sequentially actuating a plurality of mirror actuators.

Aspect 44. The method of any of Aspects 42-43, wherein actuating the plurality of mirror actuators comprises applying a sequence of pre-determined voltages to each of the plurality of mirrors.

Aspect 45. The method of Aspect 44, wherein the pre-determined voltages are based at least in part on a location of a mirror in the MEMS mirror array.

Aspect 46. An optical switch for aligning at least one input optical communication signal from at least one input fiber of an input fiber bundle with at least one output fiber of an output fiber bundle, said optical switch comprising: a light source configured to produce a control beam; a beam combiner configured to combine a communication beam and the control beam into a co-linear path towards a MEMS mirror, wherein the MEMS mirror is supported by a gimbal and a plurality of actuators are configured to rotate the MEMS mirror about the gimbal in different directions; a beam splitter configured to split the communication beam and the control beam after reflection by the MEMS mirror; an image sensor configured to capture an image of the control beam after interacting with the beam splitter; one or more hardware processors in communication with the image sensor and configured to: receive a first request to align the communication beam with a first output fiber; actuate at least some of the plurality of actuators to tilt the MEMS mirror to align the control beam with a desired location on the MEMS mirror associated with the first output fiber based on first calibration data; determine a first position of a centroid of the control beam on the image sensor; actuate at least some of the plurality of actuators to tilt the MEMS mirror to correct the alignment of the control beam with the desired location on the MEMS mirror based on the first position of the centroid; receive a first request to align the communication beam with a second output fiber; predict second calibration data based at least in part on the first calibration data and the first position of the centroid; and actuate at least some of the plurality of actuators to tilt the MEMS mirror to align the control beam with a desired location on the MEMS mirror associated with the second output fiber based at least in part on the second calibration data.

Aspect 47. The optical switch of Aspect 46, wherein to predict the second calibration data, the one or more hardware processors are configured to determine, using machine learning, the second calibration data.

Aspect 48. The optical switch of any of Aspects 46-47 wherein the first and second output fiber are same.

Aspect 49. The optical switch of any of Aspects 46-48, wherein the first and second output fiber are different.

Aspect 50. The optical switch of any of Aspects 46-49, wherein the first position of the centroid of the control beam on the image sensor corresponds to a position of a centroid of the communication beam on the MEMS mirror.

Aspect 51. The optical switch of any of Aspects 46-50, wherein the beam splitter is configured to reflect the communication beam towards another MEMS mirror.

Aspect 52. The optical switch of any of Aspects 46-51, wherein an orientation of the MEMS mirror is based on a set of predetermined applied voltages to each of a plurality of MEMS mirror actuators and the first calibration data comprises the set predetermined applied voltages.

Aspect 53. The optical switch of any of Aspects 46-52, wherein the second calibration data comprises an updated set of applied voltages.

Aspect 54. The optical switch of any of Aspects 46-53, wherein the one or more hardware processors are configured to: determine an approximate time until end of life of the optical switch based on the first and second calibration data.

Aspect 55. The optical switch of Aspect 54, wherein to determine the approximate time until end of life of the optical switch based on a difference between the first and second calibration data.

Aspect 56. The optical switch of any of Aspects 54-55, wherein the one or more hardware processors are configured to: generate an alert based on the approximate time until end of life of the optical switch.

Aspect 57. The optical switch of any of Aspects 46-56 further comprising: an input configured to receive the input fiber bundle.

Aspect 58. The optical switch of any of Aspects 46-57 further comprising an output configured to receive the output fiber bundle.

Aspect 59. The optical switch of any of Aspects 46-58, wherein the image sensor comprises a CMOS camera sensor.

Aspect 60. The optical switch of any of Aspects 46-59, wherein a collimator configured to collimate the at least one input optical communication signal to produce the communication beam.

Aspect 61. The optical switch of any of Aspects 46-60, comprising a screen configured to produce the image when interacting with the control beam.

Aspect 62. [alignment tracking with AI learning]An optical switch for aligning at least one input optical communication signal from at least one input fiber of an input fiber bundle with at least one output fiber of an output fiber bundle, said optical switch comprising: a light source configured to produce a control beam; a beam combiner configured to combine a communication beam and the control beam into a co-linear path towards a MEMS mirror, wherein the MEMS mirror is supported by a gimbal and a plurality of actuators are configured to rotate the MEMS mirror about the gimbal in different directions; a beam splitter configured to split the communication beam and the control beam after reflection by the MEMS mirror; an image sensor configured to capture an image of the control beam after interacting with the beam splitter; one or more hardware processors in communication with the image sensor and configured to: actuate at least some of the plurality of actuators to tilt the MEMS mirror to align the control beam with a desired location on the MEMS mirror associated with a first output fiber based on first calibration data; determine a first position of a centroid of the control beam on the image sensor; and determine, using machine learning, a correction to the first calibration data based at least in part on the first position.

Aspect 63. The optical switch of Aspect 62, wherein the position of the centroid of the control beam on the image sensor corresponds to a position of a centroid of the communication beam on the MEMS mirror.

Aspect 64. The optical switch of any of Aspects 62-63, wherein the beam splitter is configured to reflect the communication beam towards another MEMS mirror.

Aspect 65. The optical switch of any of Aspects 62-64, wherein an orientation of the MEMS mirror is based on a set of predetermined applied voltages to each of a plurality of MEMS mirror actuators and the first calibration data comprises the set predetermined applied voltages.

Aspect 66. The optical switch of any of Aspects 62-65, wherein the correction comprises an updated set of applied voltages.

Aspect 67. The optical switch of any of Aspects 62-66, wherein the one or more hardware processors are configured to: determine an approximate time until end of life of the optical switch based on the correction to the first calibration data.

Aspect 68. The optical switch of Aspect 67, wherein the one or more hardware processors are configured to: generate an alert based on the approximate time until end of life of the optical switch.

Aspect 69. An optical switch for aligning at least one input optical communication signal from at least one input fiber of an input fiber bundle with at least one output fiber of an output fiber bundle, said optical switch comprising: a light source configured to produce a control beam; a beam combiner configured to combine a communication beam and the control beam into a co-linear path towards a MEMS mirror, wherein the MEMS mirror is supported by a gimbal and a plurality of actuators are configured to rotate the MEMS mirror about the gimbal in different directions; a beam splitter configured to split the communication beam and the control beam after reflection by the MEMS mirror; an image sensor configured to capture an image of the control beam after interacting with the beam splitter; one or more hardware processors in communication with the image sensor and configured to: receive a first request to align the communication beam with a first output fiber; actuate at least some of the plurality of actuators to tilt the MEMS mirror to align the control beam with a desired location on the MEMS mirror associated with the first output fiber based on first calibration data; determine a first position of a centroid of the control beam on the image sensor; and predict using a machine learning classifier, a time to end of life of the optical switch based at least in part on the first calibration data and the first position of the centroid.

### Terminology and Other Considerations

Unless defined otherwise, all technical and scientific terms used herein have the same meaning as is commonly understood by one of ordinary skill in the art. The use of the term "including" as well as other forms, such as "include," "includes," and "included," is not limiting. The use of the term "having" as well as other forms, such as "have", "has," and "had," is not limiting. The terms "comprising," "including," "having," and the like are synonymous and are used inclusively, in an open-ended fashion, and do not exclude additional elements, features, acts, operations, and so forth. That is, the above terms are to be interpreted synonymously with the phrases "having at least" or "including at least." For example, when used in the context of a process, the term "comprising" means that the process includes at least the recited steps, but may include additional steps. When used in the context of a device, the term "comprising" means that the device includes at least the recited features or components, but may also include additional features or components. Also, the term "or" is used in its inclusive sense (and not in its exclusive sense) so that when used, for example, to connect a list of elements, the term "or" means one, some, or all of the elements in the list. Further, the term "each," as used herein, in addition to having its ordinary meaning, can mean any subset of a set of elements to which the term "each" is applied.

Conditional language, such as "can," "could," "might," or "may," unless specifically stated otherwise, or otherwise understood within the context as used, is generally intended to convey that certain examples include, while other examples do not include, certain features, elements, or steps. Thus, such conditional language is not generally intended to imply that features, elements, or steps are in any way required for one or more examples or that one or more examples necessarily include logic for deciding, with or without user input or prompting, whether these features, elements, or steps are included or are to be performed in any particular embodiment.

Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain examples require the presence of at least one of X, at least one of Y, and at least one of Z.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than 10% of, within less than 5% of, within less than 1% of, within less than 0.1% of, and within less than 0.01% of the stated amount.

The term "and/or" as used herein has its broadest least limiting meaning, which is the disclosure includes A alone, B alone, both A and B together, or A or B alternatively, but does not require both A and B or require one of A or one of B. As used herein, the phrase "at least one of" A, B, "and" C should be construed to mean a logical A or B or C, using a non-exclusive logical or.

Any methods disclosed herein need not be performed in the order recited. The methods disclosed herein include certain actions taken by a practitioner; however, they can also include any third-party instruction of those actions, either expressly or by implication.

Conditional language used herein, such as, among others, "can," "could," "might," "may," "e.g.," and the like, unless specifically stated otherwise, or otherwise understood within the context as used, is generally intended to convey that certain, certain features, elements and/or steps are optional. Thus, such conditional language is not generally intended to imply that features, elements and/or steps are in any way required or that one or more implementations necessarily include logic for deciding, with or without other input or prompting, whether these features, elements and/or steps are included or are to be always performed. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain implementations require the presence of at least one of X, at least one of Y, and at least one of Z.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than 10% of, within less than 5% of, within less than 1% of, within less than 0.1% of, and within less than 0.01% of the stated amount. As another example, in certain implementations, the terms "generally parallel" and "substantially parallel" refer to a value, amount, or characteristic that departs from exactly parallel by less than or equal to 15 degrees, 10 degrees, 5 degrees, 3 degrees, 1 degree, 0.1 degree, or otherwise.

Any methods disclosed herein need not be performed in the order recited. The methods disclosed herein include certain actions taken by a practitioner; however, they can also include any third-party instruction of those actions, either expressly or by implication.

The methods and tasks described herein may be performed and fully automated by a computer system. The computer system may, in some cases, include multiple distinct computers or computing devices (for example, physical servers, workstations, storage arrays, cloud computing resources, etc.) that communicate and interoperate over a network to perform the described functions. Each such computing device typically includes a processor (or multiple processors) that executes program instructions or modules stored in a memory or other non-transitory computer-readable storage medium or device (for example, solid state storage devices, disk drives, etc.). The various functions disclosed herein may be embodied in such program instructions, and/or may be implemented in application-specific circuitry (for example, ASICs or FPGAs) of the computer system. Where the computer system includes multiple computing devices, these devices may, but need not, be co-located. The results of the disclosed methods and tasks may be persistently stored by transforming physical storage devices, such as solid state memory chips and/or magnetic disks, into a different state. The computer system may be a cloud-based computing system whose processing resources are shared by multiple distinct business entities or other users.

While the above detailed description has shown, described, and pointed out novel features, it can be understood that various omissions, substitutions, and changes in the form and details of the devices or algorithms illustrated can be made without departing from the spirit of the disclosure. As can be recognized, certain portions of the description herein can be embodied within a form that does not provide all of the features and benefits set forth herein, as some features can be used or practiced separately from others. The scope of certain implementations disclosed herein is indicated by the appended claims rather than by the foregoing description. All changes which come within the meaning and range of equivalency of the claims are to be embraced within their scope.

## Claims

1. An optical switch for aligning at least one input optical communication signal from at least one input fiber of an input fiber bundle with at least one output fiber of an output fiber bundle, said optical switch comprising:
a light source configured to produce a control beam;
a beam combiner configured to combine a communication beam and the control beam into a co-linear path towards a MEMS mirror, wherein the MEMS mirror is supported by a gimbal and a plurality of actuators are configured to rotate the MEMS mirror about the gimbal in different directions;
a beam splitter configured to split the communication beam and the control beam after reflection by the MEMS mirror;
an image sensor configured to capture an image of the control beam after interacting with the beam splitter;
one or more hardware processors in communication with the image sensor and configured to:
receive a first request to align the communication beam with a first output fiber;
actuate at least some of the plurality of actuators to tilt the MEMS mirror to align the control beam with a desired location on the MEMS mirror associated with the first output fiber based on first calibration data;
determine a first position of a centroid of the control beam on the image sensor;
actuate at least some of the plurality of actuators to tilt the MEMS mirror to correct the alignment of the control beam with the desired location on the MEMS mirror based on the first position of the centroid;
receive a first request to align the communication beam with a second output fiber;
predict second calibration data based at least in part on the first calibration data and the first position of the centroid; and
actuate at least some of the plurality of actuators to tilt the MEMS mirror to align the control beam with a desired location on the MEMS mirror associated with the second output fiber based at least in part on the second calibration data.

2. The optical switch of Claim 1, wherein to predict the second calibration data, the one or more hardware processors are configured to determine, using machine learning, the second calibration data.

3. The optical switch of Claim 1 or 2, wherein the first position of the centroid of the control beam on the image sensor corresponds to a position of a centroid of the communication beam on the MEMS mirror.

4. The optical switch of any of Claims 1-3, wherein the beam splitter is configured to reflect the communication beam towards another MEMS mirror.

5. The optical switch of any of Claims 1-4, wherein an orientation of the MEMS mirror is based on a set of predetermined applied voltages to each of a plurality of MEMS mirror actuators and the first calibration data comprises the set predetermined applied voltages.

6. The optical switch of any of Claims 1-5, wherein the second calibration data comprises an updated set of applied voltages.

7. The optical switch of any of Claims 1-6, wherein the one or more hardware processors are configured to: determine an approximate time until end of life of the optical switch based on the first and second calibration data,
preferably, determine the approximate time until end of life of the optical switch based on a difference between the first and second calibration data;
and preferably, generate an alert based on the approximate time until end of life of the optical switch.

8. The optical switch of any of Claims 1-7 further comprising: an input configured to receive the input fiber bundle,
preferably, the optical switch further comprises: an output configured to receive the output fiber bundle; and
preferably, the optical switch further comprises: a screen configured to produce the image when interacting with the control beam; and
preferably, the image sensor comprises a CMOS camera sensor.

9. The optical switch of any of Claims 1-8, wherein a collimator configured to collimate the at least one input optical communication signal to produce the communication beam.

10. An optical switch for aligning at least one input optical communication signal from at least one input fiber of an input fiber bundle with at least one output fiber of an output fiber bundle, said optical switch comprising:
a light source configured to produce a control beam;
a beam combiner configured to combine a communication beam and the control beam into a co-linear path towards a MEMS mirror, wherein the MEMS mirror is supported by a gimbal and a plurality of actuators are configured to rotate the MEMS mirror about the gimbal in different directions;
a beam splitter configured to split the communication beam and the control beam after reflection by the MEMS mirror;
an image sensor configured to capture an image of the control beam after interacting with the beam splitter;
one or more hardware processors in communication with the image sensor and configured to:
actuate at least some of the plurality of actuators to tilt the MEMS mirror to align the control beam with a desired location on the MEMS mirror associated with a first output fiber based on first calibration data;
determine a first position of a centroid of the control beam on the image sensor; and
determine, using machine learning, a correction to the first calibration data based at least in part on the first position.

11. The optical switch of Claim 10, wherein the position of the centroid of the control beam on the image sensor corresponds to a position of a centroid of the communication beam on the MEMS mirror.

12. The optical switch of Claim 10 or 11, wherein the beam splitter is configured to reflect the communication beam towards another MEMS mirror.

13. The optical switch of any of Claims 10-12, wherein an orientation of the MEMS mirror is based on a set of predetermined applied voltages to each of a plurality of MEMS mirror actuators and the first calibration data comprises the set predetermined applied voltages,
preferably, the correction comprises an updated set of applied voltages.

14. The optical switch of any of Claims 10-13, wherein the one or more hardware processors are configured to: determine an approximate time until end of life of the optical switch based on the correction to the first calibration data; and preferably, generate an alert based on the approximate time until end of life of the optical switch.

15. An optical switch for aligning at least one input optical communication signal from at least one input fiber of an input fiber bundle with at least one output fiber of an output fiber bundle, said optical switch comprising:
a light source configured to produce a control beam;
a beam combiner configured to combine a communication beam and the control beam into a co-linear path towards a MEMS mirror, wherein the MEMS mirror is supported by a gimbal and a plurality of actuators are configured to rotate the MEMS mirror about the gimbal in different directions;
a beam splitter configured to split the communication beam and the control beam after reflection by the MEMS mirror;
an image sensor configured to capture an image of the control beam after interacting with the beam splitter;
one or more hardware processors in communication with the image sensor and configured to:
receive a first request to align the communication beam with a first output fiber;
actuate at least some of the plurality of actuators to tilt the MEMS mirror to align the control beam with a desired location on the MEMS mirror associated with the first output fiber based on first calibration data;
determine a first position of a centroid of the control beam on the image sensor; and
predict using a machine learning classifier, a time to end of life of the optical switch based at least in part on the first calibration data and the first position of the centroid.
